# EUROPÄISCHE PATENTANMELDUNG

(11) **EP 1 217 818 A2**
(43) Veröffentlichungstag der Anmeldung: **26.06.2002**
(21) Anmeldenummer: 01128656.4
(22) Anmeldetag: 30.11.2001
(51) Int. Cl.: H04N 1/00

(54) **Basisstation für ein schnurloses Telefonsystem**

(30) Priorität: 20.12.2000 DE 20021538 U
(71) Anmelder: Dosch & Amand GmbH & Co. KG, 81679 München (DE)
(72) Erfinder: Dosch, Franz, 83026 Rosenheim (DE)
(74) Vertreter: Grünecker, Kinkeldey, Stockmair & Schwanhäusser Anwaltssozietät

(57) **Zusammenfassung**

Die Erfindung betrifft eine Basisstation für ein schnurloses Telefonsystem, umfassend Einrichtungen, die geeignet sind, ein mobiles Endgerät transparent mit einem Computerperipheriegerät, das der Basisstation zugeordnet ist, zu verbinden.

## Beschreibung

Die Erfindung betrifft ein schnurloses Telefonsystem umfassend eine Basisstation und mindestens ein Endgerät, das als Computer ausgeführt ist. Insbesondere betrifft die Erfindung eine Basisstation, die den Computer über ein Telefonnetz mit dem Internet und die den Computer mit einem Computerperipheriegerät verbindet.

Ein wachsendes Interesse von Computeranwendern am Internet führt dazu, dass viele Anwender ihren Computer über ein analoges Modem oder einen ISDN-(Integrated Services Digital Network-) Adapter an ihren analogen bzw. ISDN-Telefonanschluss anschließen. Die Computer umfassen herkömmliche Desktop-Computer und Notebook-Computer sowie Computer, die speziell auf das Internet abgestimmt sind. Diese speziellen Computer, im folgenden auch als Internet-Endgeräte bezeichnet, sollen einem Anwender die Nutzung des Internets so einfach und intuitiv wie möglich machen. Einige Internet-Endgeräte umfassen jeweils eine berührungsempfindliche Anzeige, die das Navigieren im Internet durch eine direkte Auswahl auf der Anzeige ermöglichen. Um einer steigenden Mobilität der Anwender Rechnung zu tragen, werden Internet-Endgeräte tragbar und schnurlos. Solche mobilen Internet-Endgeräte sind kompakt und im wesentlichen flach und werden daher auch als WebPads bezeichnet.

Einem steigenden Bedürfnis nach Mobilität beim Telefonieren tragen schnurlose Telefonsysteme Rechnung, die typischerweise eine Basisstation und mindestens ein mobiles Telefon, im folgenden auch als mobiles Endgerät bezeichnet, umfassen. Schnurlose Telefonsysteme gemäß dem Stand der Technik werden beispielsweise in Wohnungen und Büros eingesetzt und sind beispielsweise gemäß dem DECT-(Digital European Cordless Telecommunication-) Standard ausgeführt.

Der DECT-Standard ist ein einheitlicher digitaler europäischer Standard für schnurlose Telefone. Dieser Standard baut auf den bisherigen Standards CT1 und CT2 auf und ermöglicht digitales schnurloses Telefonieren für eine Vielzahl von Teilnehmern über eine oder mehrere Basisstationen.

Gemäß dem DECT-Standard ist für die Funkübertragung ein Frequenzbereich zwischen 1880 MHz bis 1900 MHz reserviert, der gemäß eines Frequenzvielfachzugriffs (Frequency Division Multiple Access, FDMA) in 10 Trägerfrequenzen zu je 1728 KHz aufgeteilt ist. Jeder Träger wird zusätzlich im Zeitvielfachzugriff (Time Division Multiple Access, TDMA) betrieben, wobei die für jeden Träger vorgesehenen 24 Zeitschlitze je zur Hälfte der Verbindung Basisstation-Mobilstation sowie je zur Hälfte der Verbindung Mobilstation-Basisstation dienen. Damit stellt ein DECT-System 120 Vollduplexkanäle mit einer Kanalbitrate von 32 kbps zur Verfügung und gestattet bei einer Abstrahlleistung von 100mW, entsprechend 24 dBm, einen Kommunikationsradius von ca. 300 m in freiem Gelände sowie von ca. 50 m innerhalb von Gebäuden.

Schnurlose Telefonsysteme bilden eine Infrastruktur, die auch zur Anbindung eines Computers an das Internet geeignet ist. Dabei wird der Computer mittels eines mobilen Endgeräts, das an eine bestehende Schnittstelle des Computers angeschlossen wird, oder eine Einsteckkarte, die in den Computer eingesteckt bzw. eingebaut wird, in das schnurlose Telefonsystem eingebunden. Die schnurlose Anbindung an das Telefonnetz gewährleistet die Mobilität des Computers innerhalb des Kommunikationsradiuses und ist auch eine zeitsparende und kostengünstige Alternative zu einer Verkabelung, vor allem wenn sich der Computer von dem Telefonanschluss entfernt befindet.

PCMCIA-(Personal Computer Memory Card International Association-) bzw. PC-Karten sind standardisierte Einsteckkarten zur Erweiterung eines Computers, beispielsweise eines Laptop-Computers oder Notebook-Computers. Durch eine Vielzahl von verschiedenartigen Einsteckkarten kann ein Computer einfach und bequem mit verschiedenen Funktionalitäten ausgerüstet werden. Die Einsteckkarten bieten beispielsweise Speichererweiterungen und Schnittstellen zu anderen Computern. Weiterhin stellen einige Einsteckkarten eine schnurlose Kommunikation, beispielsweise gemäß des DECT-Standards, zur Verfügung.

Schnurlose Telefonsysteme gewährleisten somit mobiles Telefonieren und Anbinden eines mobilen, oder auch stationären, Computers an das Telefonnetz.

Da Computerperipheriegeräte, beispielsweise Drucker und Scanner, an bestehende Schnittstellen eines Computer angeschlossen werden, wird die Mobilität des Computers, und somit des Anwenders, stark eingeschränkt. Da die Computerperipheriegeräte jeweils einem Computer zugeordnet sind, können die Computerperipheriegeräte über andere Computer nicht erreicht werden.

Zur gemeinsamen Nutzung von Computerresourcen einschließlich Computerperipheriegeräten werden Computer gemäß dem Stand der Technik zu einem Computernetzwerk, beispielsweise einem lokalen Computernetzwerk (Local Area Network, LAN), zusammengeschlossen.

Es ist somit die Aufgabe der Erfindung, eine Vorrichtung und ein System bereitzustellen, die die Beweglichkeit mobiler Computer einfach und kostengünstig erhöhen und die gemeinsame Nutzung von Computerperipheriegeräten durch mehrere mobile Computer ermöglichen.

Diese Aufgabe wird durch die Gegenstände der unabhängigen Ansprüche 1 und 14 erfindungsgemäß gelöst. Bevorzugte Ausgestaltungen der Erfindung sind Gegenstände der abhängigen Ansprüche.

Die erfindungsgemäße Basisstation für ein schnurloses Telefonsystem umfasst Einrichtungen, die geeignet sind, ein mobiles Endgerät transparent mit einem Computerperipheriegerät, das der Basisstation zugeordnet ist, zu verbinden.

Gemäß eines ersten Aspekts der Erfindung ist das Endgerät ein Computer, insbesondere ein tragbarer Computer oder Webpad und das Computerperipheriegerät ist ein handelsübliches Computerperipheriegerät, insbesondere ein Drucker oder Scanner.

Das erfindungsgemäße schnurloses Telefonsystem umfasst ein mobiles Endgerät, insbesondere einen tragbaren Computer oder ein Webpad, ein Computerperipheriegerät, insbesondere einen Drucker oder Scanner, und eine Basisstation, umfassend Einrichtungen, die geeignet sind, das Endgerät transparent mit dem Computerperipheriegerät, das der Basisstation zugeordnet ist, zu verbinden.

Gemäß eines zweiten Aspekts der Erfindung kommuniziert die Basisstation mit dem Endgerät gemäß des DECT-Standards.

Gemäß eines dritten Aspekts der Erfindung kommuniziert die Basisstation mit dem Endgerät gemäß des Bluetooth-Standards.

Gemäß eines vierten Aspekts der Erfindung kommuniziert die Basisstation mit dem Endgerät gemäß des SWAP-Standards.

Gemäß eines fünften Aspekts der Erfindung kommuniziert die Basisstation mit dem Computerperipheriegerät drahtgebunden.

Gemäß eines sechsten Aspekts der Erfindung kommuniziert die Basisstation mit dem Computerperipheriegerät gemäß eines seriellen Protokolls, insbesondere gemäß des RS 232-Standards, V.24-Standards, USB-Standards oder Firewire-Standards.

Gemäß eines siebten Aspekts der Erfindung kommuniziert die Basisstation mit dem Computerperipheriegerät gemäß eines parallelen Protokolls, insbesondere gemäß des LPT-Standards, IDE-Standards oder SCSI-Standards.

Gemäß eines achten Aspekts der Erfindung ist das Endgerät als mobiles Telefon ausgeführt.

Gemäß eines neunten Aspekts der Erfindung umfasst die Basisstation eine Verbindungseinrichtung zum Verbinden der Basisstation mit einem Telefonnetz.

Gemäß eines zehnten Aspekts der Erfindung ist die Verbindungseinrichtung als digitale, vorzugsweise ISDN- oder DSL-konforme, Verbindungseinrichtung ausgeführt.

Gemäß eines elften Aspekts der Erfindung sind die Einrichtungen der Basisstation geeignet, eine erste Verbindung zwischen dem Endgerät und dem Computerperipheriegerät und eine zweite Verbindung zwischen dem Endgerät und dem Telefonnetz im wesentlichen gleichzeitig bereitzustellen.

Gemäß eines zwölften Aspekts der Erfindung sind die Einrichtungen der Basisstation geeignet, eine dritte Verbindung zwischen einem weiteren Endgerät und dem Telefonnetz im wesentlichen gleichzeitig bereitzustellen.

Im folgenden werden Vorteile sowie bevorzugte Ausführungsformen der Erfindung unter Bezugnahme auf die beigefügten Zeichnungen näher erläutert. Dabei zeigen die Zeichnungen im einzelnen:
Fig. 1 eine schematische Darstellung der Verbindung eines Computers an das Internet über einen schnurgebundenen Anschluss an ein öffentliches Telefonnetz gemäß dem Stand der Technik,
Fig. 2 eine schematische Darstellung eines lokalen Computernetzwerks gemäß dem Stand der Technik,
Fig. 3 eine schematische Darstellung der Verbindung eines Computers an das Internet über ein schnurloses Telefonsystem an ein öffentliches Telefonnetz gemäß dem Stand der Technik, und
Fig. 4 eine schematische Darstellung des erfindungsgemäßen Telefonsystems.

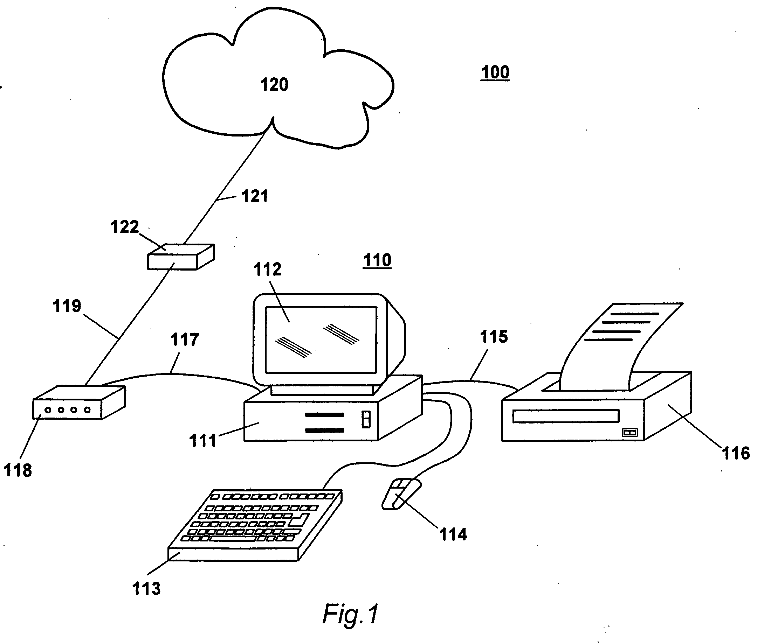

Fig. 1 zeigt ein System 100 umfassend einen Computer 110, einen Drucker 116, ein externes Modem 118, einen Telefonanschluss 122 und ein öffentliches Telefonnetz 120. Gemäß Fig. 1 ist der Computer 110 als herkömmlicher Desktop-Computer ausgeführt und umfasst eine Haupteinheit 111 mit (nicht gezeigt) Hauptplatine, Plattenlaufwerken, Netzteil usw., Monitor 112, Tastatur 113 und Maus 114. Der Computer 110 ist über ein Druckerkabel 115 mit dem Drucker 116 verbunden. Dazu weist die die Haupteinheit 111 üblicherweise eine parallele Schnittstelle gemäß dem LPT- (Line Print Terminal-) Standard auf. Weiterhin ist der Computer 110 über ein Modemkabel 117 mit dem Modem 118 verbunden. Dazu weist die Haupteinheit 111 üblicherweise eine serielle Schnittstelle auf. Das Modem 118 ist über eine Telefonanschlussleitung 119 mit dem Telefonanschluss 122 verbunden. Der Telefonanschluss 122 bietet über eine Telefonleitung 121 einen Zugang zum öffentlichen Telefonnetz 120. In einer Modifikation, bei der der Telefonanschluss 122 als ISDN-Telefonanschluss mit NT- (Network Terminal-) Adapter 122 ausgeführt ist, sorgt ein ISDN-Adapter 118 für die Verbindung zwischen dem Telefonnetz 120 und dem Computer 110. Dabei kann der ISDN-Adapter 118 als Einsteckkarte ausgeführt und in die Haupteinheit 111 eingesteckt bzw. eingebaut sein.

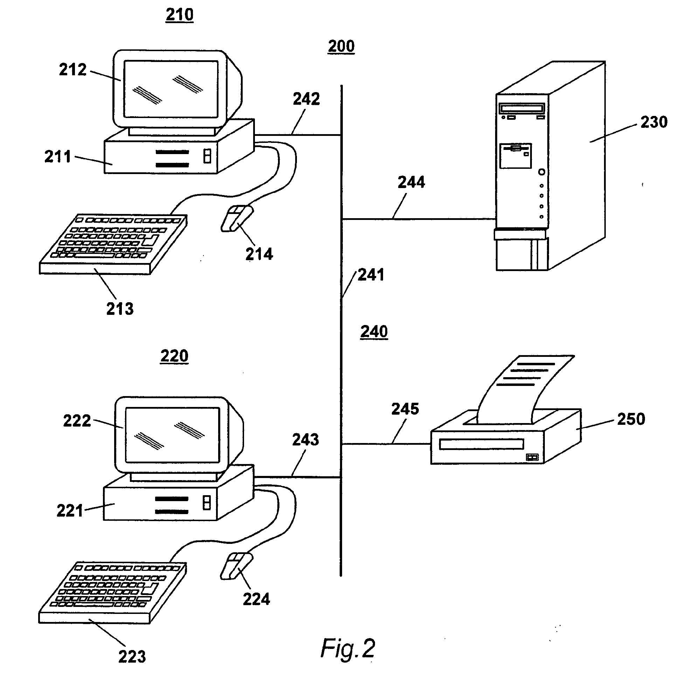

Fig. 2 zeigt ein exemplarisches Computernetzwerk 200 umfassend Arbeitsplatzrechner 210, 220, einen Server-Computer 230 und einen Netzwerkdrucker 250, die über ein Netzwerk 240 miteinander verbunden sind. Bei den Arbeitsplatzrechnern 210, 220 handelt es sich um herkömmliche Computer, beispielsweise Desktop-Computer. Jeder Arbeitsplatzrechner 210, 220 umfasst eine Haupteinheit 211, 221 mit (nicht gezeigt) Hauptplatine, Plattenlaufwerken, Netzteil usw., einen Monitor 212, 222, eine Tastatur 213, 223 und eine Maus 214, 224. Weiterhin umfassen die Haupteinheiten 211, 221 eine Schnittstelle zum Netzwerk 240, die beispielsweise als Netzwerkkarte ausgeführt ist. Die Arbeitsplatzrechner 210, 220 sind über Leitungen 242, 243 mit einer Hauptleitung 241 des Netzwerks 240 verbunden. Bei dem Netzwerk 240 kann es sich beispielsweise um ein Ethernet-Netzwerk handeln. Der Server-Computer 230 ist über eine Leitung 244 mit dem Computernetz 240 verbunden. Der Netzwerkdrucker 250 ist über eine Leitung 245 ebenfalls mit dem Netzwerk 240 verbunden. Veranlasst ein Anwender einer der Arbeitsplatzrechner 210, 220 das Ausdrucken von Daten, beispielsweise einer Datei, werden die Daten, die die Datei repräsentieren, zunächst über die Leitung 242 oder 243, über die Hauptleitung 241 und über die Leitung 244 an den Server-Computer 230 übertragen, der den Drucker 250 verwaltet, d. h. eingehende Druckaufträge entgegennimmt und diese bei Verfügbarkeit des Druckers 250 an den Drucker 250 überträgt. Zum Ausdrucken der Datei werden die Daten dann von dem Server-Computer 230 über die Leitung 244, die Hauptleitung 241 und die Leitung 245 an den Drucker 250 übertragen, der an die zu druckende Datei ausdruckt. Somit benutzen die Anwender der Arbeitsplatzrechner 210 und 220 den Drucker 250 gemeinsam. Während Fig. 2 ein drahtgebundenes Computernetzwerk 200 zeigt, können in einer Modifikation eine oder mehrere der Leitungen durch schnurlose Verbindungen ersetzt werden.

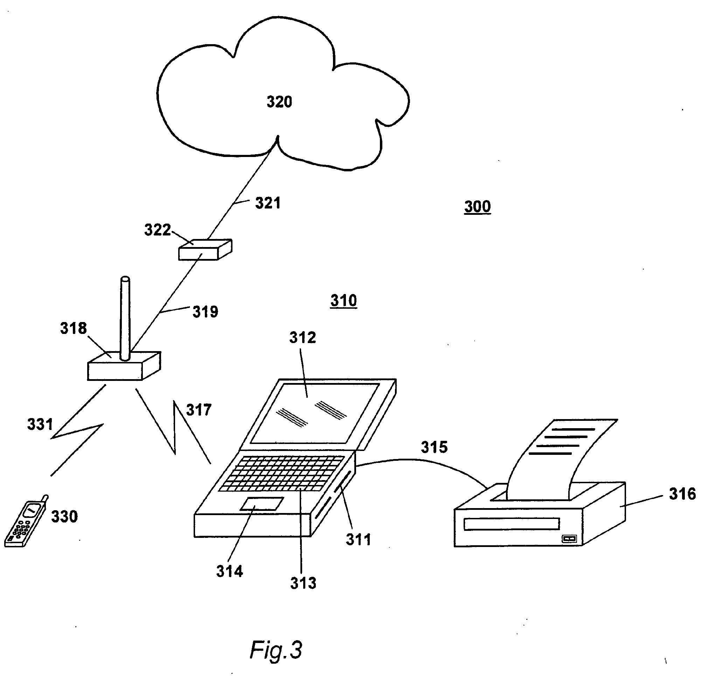

Fig. 3 zeigt ein auf einem schnurlosen Telefonsystem basierendes System 300, umfassend einen Computer 310, einen Drucker 316, eine Basisstation 318, ein mobiles Endgerät 330, einen Telefonanschluss 322 und ein Telefonnetz 320. Der in Fig. 3 gezeigte Computer 310 ist ein Notebook-Computer umfassend eine Anzeige 312, eine Tastatur 313 und ein TouchPad 314. Weiterhin umfasst der Computer 310 eine Einsteckkarte 311 zur Funkkommunikation 317 mit der Basisstation 318. Der Computer 310 ist über ein Druckerkabel 315 mit dem Drucker 316 verbunden. Das Druckerkabel 315 ist mit einer entsprechenden Schnittstelle des Computers 310 verbunden. Die Basisstation 318 ist über eine Telefonanschlussleitung 319 mit dem Telefonanschluss 322 verbunden und stellt schnurlose Verbindungen 317 und 331 zu dem Computer 310 bzw. dem mobilen Endgerät 330 zur Verfügung. Der Telefonanschluss 322 ist über eine Telefonleitung 321 mit dem öffentlichen Telefonnetz 320 verbunden. Für einen analogen Telefonanschluss 322 weist die Basisstation 318 eine geeignete analoge Verbindungseinrichtung auf; für einen digitalen Telefonanschluss 322 weist die Basisstation 318 eine entsprechende digitale Verbindungseinrichtung auf.

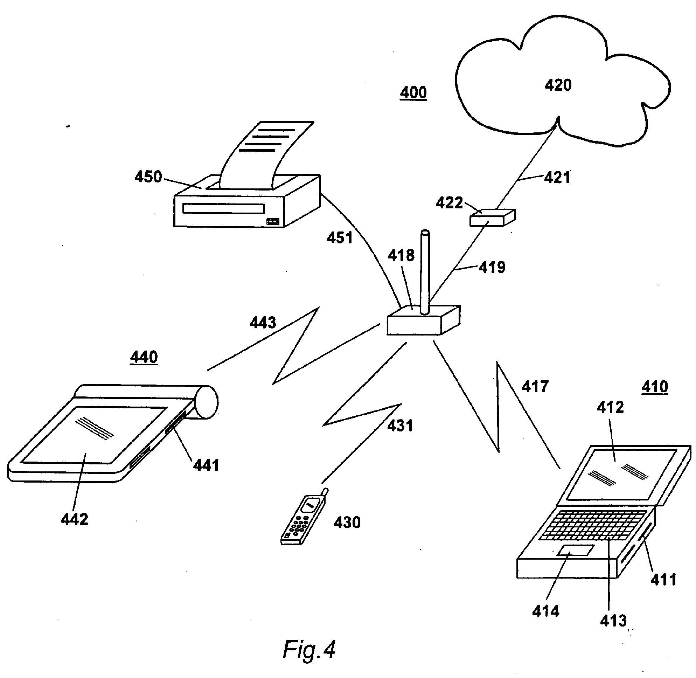

Fig. 4 zeigt ein auf dem erfindungsgemäßen Telefonsystem basierendes System 400. Das System 400 veranschaulicht die Erfindung anhand einer exemplarischen Konfiguration. Das System 400 umfasst einen Computer 410, ein mobiles Endgerät 430, ein WebPad 440, eine Basisstation 418, einen Drucker 450, einen Telefonanschluss 422 und ein öffentliches Telefonnetz 420. Der Computer 410 ist als Notebook-Computer dargestellt und umfasst eine Anzeige 412, eine Tastatur 413 und ein TouchPad 414 sowie eine Einsteckkarte 411 zur schnurlosen Kommunikation 417 mit der Basisstation 418. Das mobile Endgerät 430 ist als schnurloses Telefon dargestellt. Telefongespräche zwischen dem mobilen Endgerät 430 und dem öffentlichen Telefonnetz 420 erfolgen über eine schnurlose Verbindung 431 zur Basisstation 418. Das WebPad 440 ist ein spezieller Computer, der auf das Internet abgestimmt ist. Das WebPad 440 umfasst eine berührungsempfindliche Anzeige 442, die das Navigieren durch direkte Auswahl auf der Anzeige 442 ermöglicht. Das WebPad 440 umfasst weiterhin eine Schnittstelle 441 zur schnurlosen Kommunikation 443 mit der Basisstation 418. Die Schnittstelle 441 kann als Einsteckkarte, beispielsweise als PC-Karte, ausgeführt oder in das WebPad 440 integriert sein. Die Basisstation 418 ist über die Telefonanschlussleitung 419 mit dem Telefonanschluss 422 verbunden. Der Telefonanschluss 422 ist über eine Telefonleitung 421 mit dem öffentlichen Telefonnetz 420 verbunden. Für einen analogen Telefonanschluss 422 enthält die Basisstation 418 eine analoge Verbindungseinrichtung; für einen digitalen Telefonanschluss 422, beispielsweise einen ISDN- oder DSL- (Digital Subscriber Line-) Telefonanschluss 422 umfasst die Basisstation 418 eine entsprechende digitale Verbindungseinrichtung. In der bevorzugten Ausführungsform ist der Telefonanschluss 422 als digitaler Telefonanschluss mit einem NT-Adapter 422 ausgeführt. Die Verbindungseinrichtung der Basisstation 418 entspricht somit dem ISDN-Standard.

In der bevorzugten Ausführungsform erfolgen die Verbindungen 417, 431 und 443 zwischen der Basisstation 418 und den Endgeräten 410, 430 und 440 gemäß dem DECT-Standard. Somit sind die Funk-verbindungen 417, 431 und 443 in dem Telefonsystem gemäß der bevorzugten Ausführungsform gleichberechtigt. In anderen Ausführungsformen können unterschiedliche Standards für die verschiedenen Verbindungen 417, 431 und 443 verwendet werden oder kann eine Priorisierung der Verbindungen 417, 431 und 443 erfolgen. Gemäß der bevorzugten Ausführungsform erfolgen Verbindungen für Telefonie gemäß dem GAP- (Generic Access Profile-) Standard und für Datendienste gemäß dem DPRS- (DECT Packet Radio Service-) Standard.

Wenn ein Anwender des Computer 410 oder des WebPads 440 auf das Internet oder einen anderen Datendienst zugreift, wird von dem Computer 410 oder WebPad 440 eine DECT-Verbindung 417 oder 443 zur Basisstation 418 aufgebaut. Die Basisstation 418 baut eine Verbindung über die Telefonanschlussleitungl 419 und den Telefonanschluss 422 sowie die Telefonleitung 421 zum öffentlichen Telefonnetz 420 auf.

Der Drucker 450 ist der Basisstation 418 zugeordnet. In der bevorzugten Ausführungsform handelt es sich um einen handelsüblichen Drucker 450, der beispielsweise eine serielle oder parallele Schnittstelle aufweist und über eine Leitung 451 mit der Basisstation 418 verbunden ist. Die serielle Schnittstelle kann beispielsweise als V.24- oder RS 232-Schnittstelle ausgeführt sein. Altemativ kann die serielle Schnittstelle als USB- (Universal Seriell Bus-) oder Firewire- Schnittstelle ausgeführt sein. Weist der Drucker 450 eine parallele Schnittstelle auf, unterstützt diese vorzugsweise den LPT-Standard, der bei Druckern allgemein gebräuchlich ist. Die Basisstation 418 weist einen entsprechenden Anschluss auf. Dieser Anschluss entspricht vorzugsweise einem entsprechenden Anschluss eines herkömmlichen Computers, so dass der Drucker 450 an die Basisstation 418 statt an einen Computer angeschlossen werden kann. In einer alternativen Ausführungsform erfolgt die Verbindung 451 gemäß dem IDE- (Integrated/Intelligent Drive Electronics-) oder SCSI- (Small Computer Systems Interface-) Standard. Zur weiteren Vereinfachung des Systems 400 kann die Verbindung 451 ebenfalls schnurlos, beispielsweise gemäß dem Bluetooth-Standard oder dem SWAP- (Shared Wireless Access Protocol- aka HomeRF-) Standard folgen.

Durch die Zuordnung des Druckers 450 zur Basisstation 418 wird die Mobilität des Computers 410 und des WebPads 440, und somit des Anwenders, erhöht, da der Drucker 450 nicht mehr dem Computer 410 oder dem WebPad 440 zugeordnet werden muss. Weiterhin steht der Drucker 450 sowohl dem Computer 410 als auch dem WebPad 440 zur Verfügung, so dass mehrere Anwender den Drucker 450 verwenden können. Die Basisstation 418 verwaltet den Drucker 450. Die Funk-verbindungen 417 und 443 dienen gemäß der Erfindung sowohl zur Übertragung von Daten zwischen dem Computer 410 bzw. dem WebPad 440 und dem öffentlichen Telefonnetz 420 als auch zwischen dem Computer 410 bzw. dem WebPad 440 und dem Drucker 450.

Der Computer 410 und das WebPad 440 verfügen jeweils über eine Treibersoftware, die Druckdaten über die Verbindung 417 oder 443 an die Basisstation 418 weiterleitet, welche die Druckdaten über die Verbindung 451 an den Drucker 450 weiterleitet. Gemäß der Erfindung erfolgt die Übertragung der Daten zwischen dem Computer 410 oder WebPad 440 und dem Computerperipheriegerät 450 transparent, d. h. die Treibersoftware und die Basisstation 418 stellen eine Funkverbindung zwischen dem Computer 410, oder WebPad 440, und dem Drucker 450 bereit, die einer direkten Verbindung des Computers 410, oder WebPads 440, über eine eigene Schnittstelle und ein Druckerkabel mit dem Drucker 450 entspricht. Dabei gewährleistet das schnurlose Telefonsystem eine einwandfreie, transparente Verbindung durch die Verwendung entsprechender Protokolle.

Gemäß der bevorzugten Ausführungsform der Erfindung umfasst die Basisstation 418 einen Prozessor und Speicher mit prozessorausführbaren Instruktionen. Weiterhin wird eine Kommunikationsarchitektur in dem schnurlosen Telefonsystem als Client/Server-Architektur ausgelegt, wobei der Client in dem Computer 410 bzw. dem WebPad 440 und der Server in der Basisstation 418 ausgeführt werden. Die Kommunikationsarchitektur basiert auf einer datenorientierten Applikationsschnittstelle (Data Application Interface, DAPI). Dabei werden Druckdaten und Zustandsdaten des Druckers 450 gekapselt und in ein Funkprotokoll des schnurlosen Telefonsystems als Nutzdaten mit Service-Kennung eingefügt. Die Kommunikationsarchitektur erlaubt das Drucken über IRQ- (Interrupt Request-) Abarbeitung und über Warteschlange. Die Kapselung der Druckdaten erfolgt vorzugsweise mittels eines Datenpakets umfassend Druckdatenanfang, Nutzdaten und Druckdatenende. Diesem Datenpaket können weitere Informationen, beispielsweise Fehlerinformationen, vorangestellt sein.

Ist der Computer 410 beispielsweise mit einem Windows-Betriebssystem ausgestattet, wird der Client als Printmonitor ausgeführt. Der Printmonitor übemimmt Druckdaten von dem Windows-Drucker-Subsystem und setzt diese in die datenorientierte Applikationsschnittstelle um, die von dem DECT-Standard unterstützt wird. Der Printmonitor führt dabei eine stufenweise Umsetzung über eine DAPI-Kontrollschnittstelle, einen DAPI-Kern-Eingang und einen DAPI-Ring3-Eingang durch.

In der bevorzugten Ausführungsform erfolgt die Installation des Printmonitors für den Client durch den Server, der in der Basisstation 418 ausgeführt wird. Somit wird eine einfache Installation des Printmonitors auf Computern, die in das schnurlose Telefonsystem eingebunden werden, gewährleistet. Bei dem Windows- Betriebssystem des Computers 410 wird dem Geräte-Manager ein entsprechender virtueller Anschluss hinzugefügt.

Beim Ausdrucken von Daten ruft das Drucker-Subsystem eine StartDoc-Funktion auf. Wenn der DECT-Treiber für die Funkverbindung verfügbar ist, wird die StartDoc-Funktion reserviert, die datenorientierte Applikationsschnittstelle eingebunden und die Verbindung über die Funkverbindung aufgebaut. Nach dem Verbindungsaufbau wird die StartDoc-Funktion freigegeben und das Drucker-Subsystem ruft eine Write-Port-Funktion auf. Die zu druckenden Daten werden an die DECT-Funkverbindung weitergereicht. Falls bei der DECT-Funkverbindung ein Fehler auftritt, wird eine Fehlermeldung an das Drucker-Subsystem zurückgegeben. Das Drucker-Subsystem reserviert eine EndDoc-Funktion. Die EndDoc-Funktion bleibt reserviert, bis die Daten übertragen sind und die DECT-Funkverbindung wieder freigegeben ist. Danach wird die EndDoc-Funktion freigegeben.

In der bevorzugten Ausführungsform der Erfindung unterstützt der Server, der in der Basisstation 418 ausgeführt wird, Drucker, die dem Plug-and-Play- (PnP-) Standard entsprechend, so dass eine automatische Konfiguration solcher Drucker unterstützt wird. Bei der automatischen Installation des erforderlichen Druckertreibers wird zunächst eine Verbindung von dem Client über die Funkverbindung zu dem Server aufgebaut und von dem Server über die Funkverbindung an den Client eingerichtet. Der Client bestätigt die Verbindung über die Funkverbindung an den Server. Der Server fordert über die Verbindung 451 Plug-and-Play-Informationen von dem Drucker 450 an. Der Drucker 450 gibt daraufhin Plug-and-Play-Informationen über die Verbindung 451 an den Server in der Basisstation 418 zurück. Der Server gibt die Plug-and-Play-Informationen an den Client weiter, der den entsprechenden Druckertreiber in dem Computer 410 installiert.

In alternativen Ausführungsformen der Erfindung können der Basisstation 418 andere handelsübliche Computerperipheriegeräte, beispielsweise Scanner, Wechselplatten oder CD- (Compact Disk-) Laufwerke zugeordnet werden. Aufgrund der Bereitstellung einer handelsüblichen Schnittstelle an der Basisstation 418 können somit handelsübliche Computerperipheriegeräte in dem erfindungsgemäßen schnurlosen Telefonsystem verwendet werden.

Weiterhin kann das mobile Endgerät als mobiles Telefon 430, wie in Fig. 4 dargestellt, ausgeführt sein, so dass Informationen, beispielsweise WAP- (Wireless Application Protocol-) Informationen und Emails, die in dem mobilen Telefon 430 gespeichert sind, ausgedruckt werden können. Das schnurlose Telefonsystem wird somit zu einem lokalen schnurlosen Kommunikationssystem.

## Patentansprüche

1. Basisstation (418) für ein schnurloses Telefonsystem (400), umfassend Einrichtungen, die geeignet sind, ein mobiles Endgerät (410, 430, 440) transparent mit einem Computerperipheriegerät (450), das der Basisstation (418) zugeordnet ist, zu verbinden.

2. Basisstation (418) nach Anspruch 1, wobei das Endgerät (410, 430, 440) ein Computer, insbesondere ein tragbarer Computer (410) oder Webpad (440), ist und das Computerperipheriegerät (450) ein handelsübliches Computerperipheriegerät, insbesondere ein Drucker (450) oder Scanner, ist.

3. Basisstation (418) nach Anspruch 1 oder 2, wobei die Basisstation (418) mit dem Endgerät (410, 430, 440) gemäß des DECT-Standards kommuniziert.

4. Basisstation (418) nach Anspruch 1 oder 2, wobei die Basisstation (418) mit dem Endgerät (410, 430, 440) gemäß des Bluetooth-Standards kommuniziert.

5. Basisstation (418) nach Anspruch 1 oder 2, wobei die Basisstation (418) mit dem Endgerät (410, 430, 440) gemäß des SWAP-Standards kommuniziert.

6. Basisstation (418) nach einem der Ansprüche 1 bis 5, wobei die Basisstation (418) mit dem Computerperipheriegerät (450) drahtgebunden kommuniziert.

7. Basisstation (418) nach Anspruch 6, wobei die Basisstation (418) mit dem Computerperipheriegerät (450) gemäß eines seriellen Protokolls, insbesondere gemäß des RS 232-Standards, V.24-Standards, USB-Standards oder Firewire-Standards, kommuniziert.

8. Basisstation (418) nach Anspruch 6, wobei die Basisstation (418) mit dem Computerperipheriegerät (450) gemäß eines parallelen Protokolls, insbesondere gemäß des LPT-Standards, IDE-Standards oder SCSI-Standards, kommuniziert.

9. Basisstation (418) nach einem der Ansprüche 1 bis 8, wobei das Endgerät (410, 430, 440) als mobiles Telefon (430) ausgeführt ist.

10. Basisstation (418) nach einem der Ansprüche 1 bis 9, weiterhin umfassend eine Verbindungseinrichtung zum Verbinden der Basisstation (418) mit einem Telefonnetz (420).

11. Basisstation (418) nach Anspruch 10, wobei die Verbindungseinrichtung als digitale, vorzugsweise ISDN- oder DSL-konforme, Verbindungseinrichtung ausgeführt ist.

12. Basisstation (418) nach Anspruch 10 oder 11, wobei die Einrichtungen geeignet sind, eine erste Verbindung zwischen dem Endgerät (410, 430, 440) und dem Computerperipheriegerät (450) und eine zweite Verbindung zwischen dem Endgerät (410, 430, 440) und dem Telefonnetz (420) im wesentlichen gleichzeitig bereitzustellen.

13. Basisstation (418) nach einem der Ansprüche 10 bis 12, wobei die Einrichtungen weiterhin geeignet sind, eine dritte Verbindung zwischen einem weiteren Endgerät und dem Telefonnetz (420) im wesentlichen gleichzeitig bereitzustellen.

14. Schnurloses Telefonsystem (400), umfassend:
ein mobiles Endgerät (410, 430, 440), insbesondere einen tragbaren Computer (410) oder ein Webpad (440),
ein Computerperipheriegerät (450), insbesondere einen Drucker (450) oder Scanner, und
eine Basisstation (418), umfassend Einrichtungen, die geeignet sind, das Endgerät (410, 430, 440) transparent mit dem Computerperipheriegerät (450), das der Basisstation (418) zugeordnet ist, zu verbinden.
